# EUROPEAN PATENT SPECIFICATION

(11) **EP 3 905 468 B1**
(45) Date of publication and mention of the grant of the patent: **18.10.2023**
(21) Application number: 21169830.3
(22) Date of filing: 22.04.2021
(51) Int. Cl.: H02J 1/08, H02J 7/14, H02J 7/22, H02K 19/34

(54) **THREE-PHASE GENERATOR WITH ADAPTIVE TAPS FOR USE IN A TRANSPORT CLIMATE CONTROL SYSTEM**
DREHSTROMGENERATOR MIT ADAPTIVEN ABZWEIGUNGEN ZUR VERWENDUNG IN EINEM TRANSPORTKLIMAREGELUNGSSYSTEM
GÉNÉRATEUR TRIPHASÉ AVEC MOYENS POUR PUISER UNE PUISSANCE ELECTRIQUE ADAPTATIFS POUR UNE UTILISATION DANS UN SYSTÈME DE COMMANDE DE CLIMATISATION DE TRANSPORT

(30) Priority: 30.04.2020 US 202016863463
(43) Date of publication of application: 03.11.2021
(73) Proprietor: Thermo King LLC, Minneapolis, MN 55420 (US)
(72) Inventor: Truckenbrod, Gregory R., Minneapolis, 55421 (US); ALOWONLE, Musibau, Brooklyn Park, 55445 (US)
(74) Representative: Howell, Matthew Dafydd

(56) References cited:
- US-A- 3 043 115
- US-A- 5 705 917

## Description

### Field

The embodiments described herein are directed to power management for systems in transport. More particularly, the embodiments described herein relate to a generator for powering or charging apparatuses and systems pertaining to transport components.

### Background

A transport climate control system is generally used to control one or more environmental conditions such as, but not limited to, temperature, humidity, air quality, or combinations thereof, of a transport unit. Examples of transport units include, but are not limited to a truck, a container (such as a container on a flat car, an intermodal container, a marine container, a rail container, etc.), a box car, a semi-tractor, a bus, or other similar transport unit.

US3043115 relates to a method and apparatus for the generation of electric power and more particularly, to electric power generation systems employing capacitance circuits for the self-excitation of an induction generator. In particular, US3043115 relates relates to a dynamo unit adapted for use in a transportation refrigeration system wherein the unit may be employed either as a motor for driving a refrigeration compressor or as a generator to supply electric power to the refrigeration controls and fans which are generally associated with such systems

US5705917 discloses a mechanically and electrically efficient, lightweight, portable motor-generator includes a stator having a plurality of windings and a rotor with a body of soft-magnetic material carrying a plurality of permanent, high energy product magnets in a surface near the stator such that relative motion of the rotor and stator causes magnetic flux from the permanent magnets to interact with and induce current in the stator windings.

### Summary

The embodiments described herein are directed to power management for systems in transport. More particularly, the embodiments described herein relate to a generator for powering or charging apparatuses and systems pertaining to transport components.

According to the present invention there is provided a three-phase generator and a transport climate control system as defined in the appended claims.

The embodiments described herein relate to a generator that may concurrently provide different voltages to multiple components, some of which are unable to receive the full supply voltage output by the generator, without the addition of a transformer to the apparatus or system.

### Drawings

References are made to the accompanying drawings that form a part of this disclosure and which illustrate embodiments described in this specification. Various changes and modifications will become apparent to those skilled in the art from the following detailed description. The use of the same reference numbers in different figures indicates similar or identical items.
FIG. 1 illustrates a transport climate control system for a transport unit that is attached to a vehicle, according to at least one embodiment described herein.
FIG. 2 illustrates a block diagram schematic of a three-phase generator for powering transport climate control system elements and components, according to at least one embodiment described herein.
FIG. 3 illustrates an electrical stator, according to at least one embodiment described herein.

### Detailed Description

The embodiments described herein are directed to power management for systems in transport. More particularly, the embodiments described herein relate to a generator for powering or charging apparatuses and systems pertaining to transport components.

The embodiments described herein relate to a generator that may concurrently provide different voltages to multiple components, some of which are unable to receive the full supply voltage output by the generator, without the addition of a transformer to the apparatus or system.

In particular, varying AC and DC load requirements may be accommodated by a common generator without invoking or requiring a transformer.

In some embodiments, the transport climate control system may include an energy storage management system designed for a range of voltage and frequency. However, some product requirements may require a supply voltage that is beyond the specified energy storage management system voltage range. The embodiments described herein may provide a generator that supplies voltage that is beyond the specified energy storage management system voltage range to some components (e.g., a compressor, one or more condenser fans, one or more evaporator blowers, etc.) while still allowing the same generator to supply a voltage to the energy storage management system that is within the specified energy storage management system voltage range.

The embodiments described herein may accommodate load requirements that are less than that output by a single source, without an additional power factor correction circuit. For example, an inductive load (e.g., a transformer, an induction machine, etc.) may have a lagging current that requires reactive power for magnetization. The reactive current required may be too high for lightly loaded machines, and the added current for reactive power may create power losses in the power management system because current and voltage are not in phase and because the current may not be sinusoidal.

Accordingly, the embodiments described and recited herein improve power efficiency of the power management system in transport. In some embodiments, this may create fuel savings for the power management system, assist the power management system to meet power quality regulation, facilitate increased reliability, and at a lower cost, by using an existing generator, thus eliminating the need for additional components, e.g., an electronic power converter or a transformer.

In the following detailed description, reference is made to the accompanying drawings, which are included as a part of the description. In the drawings, similar symbols typically identify similar components, unless context dictates otherwise. Furthermore, unless otherwise noted, the description of each successive drawing may reference features from one or more of the previous drawings to provide clearer context and a more substantive explanation of the current example embodiment. Still, the example embodiments described in the detailed description, drawings, and claims are not intended to be limiting.

The invention is defined by the features of independent claim 1. Preferred embodiments are defined in the dependent claims.

While the embodiments described below illustrate different embodiments of a transport climate-control system, it will be appreciated that the electrically powered accessory is not limited to the transport climate-control system or a climate control unit (CCU) of the transport climate-control system. A CCU may be, *e.g.,* a transport refrigeration unit (TRU). In other embodiments, the electrically powered accessory may be, for example, a crane attached to a vehicle, a cement mixer attached to a truck, one or more food appliances of a food truck, a boom arm attached to a vehicle, a concrete pumping truck, a refuse truck, a fire truck (with a power driven ladder, pumps, lights, *etc*.), *etc.* The electrically powered accessory may require continuous operation even when the vehicle's ignition is turned off and/or the vehicle is parked, idling, and/or charging. The electrically powered accessory may further require substantial power to operate, continuous operation, and/or autonomous operation (*e.g.,* controlling temperature/humidity/airflow of a climate-controlled space) on an as needed basis, independent of the vehicle's operational mode.

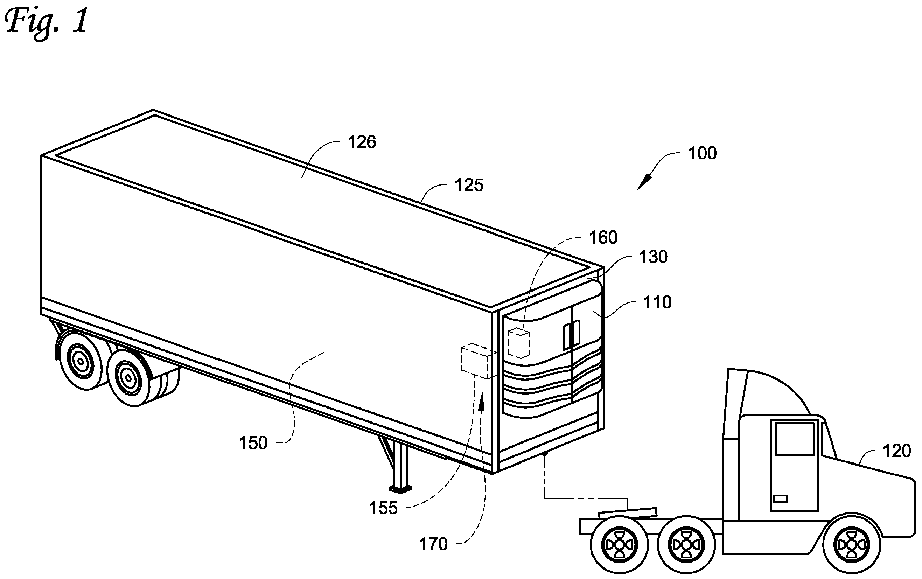

FIG. 1 illustrates one embodiment of a transport climate control system 100 for a transport unit (TU) 125 that is attached to a tractor 120. The transport climate control system 100 includes a CCU 110 that provides environmental control (e.g. temperature, humidity, air quality, etc.) within an internal space 150 of the TU 125. The transport climate control system 100 also includes a transport climate control system controller 170 and one or more sensors (not shown) that are configured to measure one or more parameters of the transport climate control system 100 and communicate parameter data to the transport climate control system controller 170.

The CCU 110 is disposed on a front wall 130 of the TU 125. In other embodiments, it will be appreciated that the CCU 110 may be disposed, for example, on a rooftop 126 or another wall of the TU 125. The tractor 120 is attached to, and is configured to tow, the transport unit 125. It will be appreciated that the embodiments described herein are not limited to trucks and trailer units, but also apply to any other type of transport unit (e.g., a container on a flat car, an intermodal container, etc.), a truck, a box car, or other similar transport unit.

The programmable transport climate control system controller 170 may comprise a single integrated control unit 160 or may comprise a distributed network of transport climate control system control elements 160, 165. The number of distributed control elements in a given network may depend upon the particular application of the principles described herein. The transport climate control system controller 170 is configured to control operation of the transport climate control system 100. The transport climate control system controller 170 may also regulate the operation of the transport climate control system 100 to prevent overloading a power source (e.g. a diesel engine) during an operational mode change of the transport climate control system, as described in more detail below.

The transport climate control system 100 may be powered by one or more power sources (not shown) including for example, a prime mover (e.g., diesel engine), a generator set, shore power, a fuel cell, solar power panel, etc. In at least one other embodiment, one or more of the power sources (e.g., a prime mover, a fuel cell, etc.) may be disposed within the CCU 110. In at least one other embodiment, one or more of the power sources may be separate from the CCU 110 and disposed within the tractor 125 (e.g., a prime mover for moving the tractor 120, etc.) or CCU 110. In other embodiments, one or more of the power sources may be on, attached to, or within the TU 120 (e.g., a generator set, a solar power panel, etc.). Also, in some embodiments, one or more of the power sources may be outside of the CCU 110, the TU 120 and the tractor 125 (e.g., shore power, etc.).

When the power source includes a diesel engine, the diesel engine may be less than a 25 horse power engine. Also, the diesel engine may be a two speed engine, a variable speed engine, etc. In some instances, the power source may be required to not exceed a predefined power level. Exceeding the predefined power level may, for example, prevent the power source from overloading, may prevent the power source from exceeding, for example, government or customer requirements (e.g., noise level regulations, emission regulations, fuel usage limits, etc.).

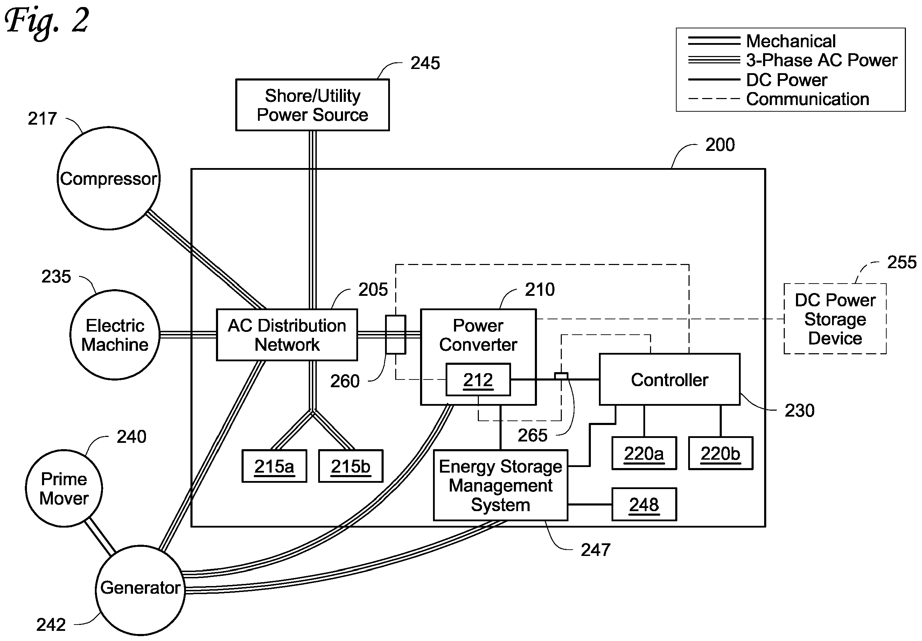

FIG. 2 illustrates a block diagram schematic of one embodiment for a power management system 200 for powering, e.g., transport climate control system 100. System 200 includes an AC distribution network 205; a power converter 210; a plurality of varying AC loads 215a, 215b; a plurality of varying DC loads 220a, 220b; a transport climate control system controller 230; a power converter input sensor 260; and a power converter output sensor 265. The embodiment shown in FIG. 2 and described herein, and the quantity of features including, but not limited to AC loads 215a and 215b, and DC loads 220a and 220b are not so limited. That is, the embodiment shown in FIG. 2 and described herein is a non-limiting example.

AC distribution network 205, in accordance with at least one embodiment, may be configured to receive three phase AC power from an electric machine 235 excited by the AC distribution network 205 and powered by a prime mover 240 (e.g., when the transport climate control system is in transport), a generator 242 powered by the prime mover 240 (e.g., when the transport climate control system is in transport), and/or from a shore/utility power source 245 (e.g., when the transport climate control system is not in transport).

The prime mover 240 may be, for example, a diesel engine, a compressed natural gas engine, etc. In some embodiments, the prime mover 240 may generate power for the power management system 200 as well as other loads. For example, in at least one embodiment, the prime mover 240 may be used for operating a vehicle, and the power management system 200 may only obtain variable amounts of power from the prime mover 240 based on the power required for operating the vehicle. In at least one other embodiment, the prime mover 240 may be disposed in CCU 110 of the transport climate control system. In some embodiments, the prime mover 240 may be disposed in a tractor/truck that provides transport for the transport climate control system.

The electric machine 235 may be and/or include, for example, an induction machine (e.g., an asynchronous induction machine), a motor, etc.

The generator 242 is configured to supply power to the AC distribution network 205. In some embodiments, the generator 242 may be part of and/or disposed within a CCU (e.g., the CCU 110 shown in FIG. 1. In other embodiments, the generator 242 may be part of a generator set that is separate and distinct from a CCU. In these embodiments, the generator set may be, for example, attached/disposed on a transport unit (e.g., the TU 120).

Embodiments of generator 242 may be a split-phase power system that facilitates high conductor efficiency and low safety risk by splitting the voltage generated thereby into lesser parts to thereby power multiple loads at those lesser voltages, all while drawing current from, e.g., prime mover 240, at levels that may be typical of a full-voltage system.

In accordance with multiple embodiments described and recited herein, generator 242 may include a three-phase generator, which may have increased utility in commercial and industrial use by generating three alternating currents to ensure continuous power generation and allowing for a balance power mode.

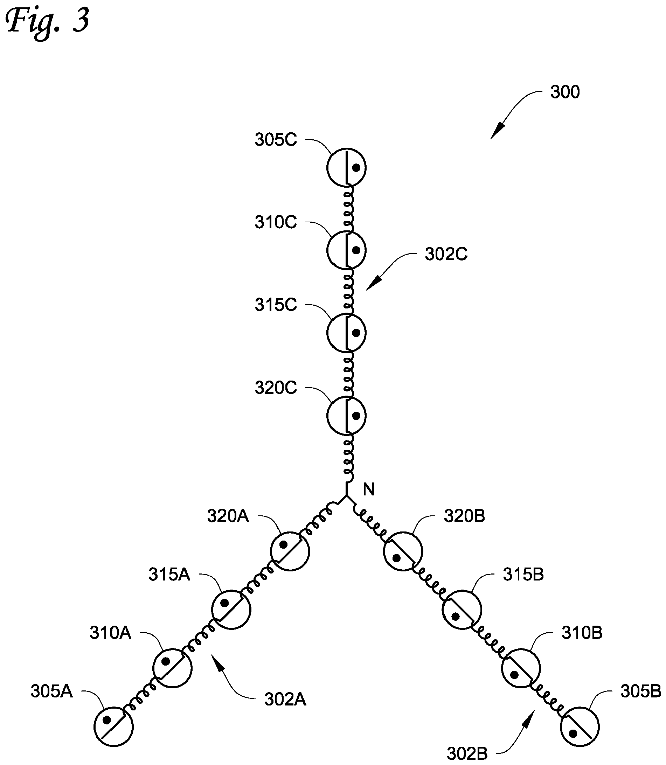

Three-phase generator 242 may have connected thereto multiple electrical stator windings, each having multiple coil turns (see FIG. 3). In accordance with multiple embodiments described and recited herein, the electrical stator windings may be configured in a Y-configuration (see FIG. 3), of which each electrical stator winding have at least three simultaneously-powered output lines, alternatively referred to as wires or conductors, connected to and leading away from the power source of the generator, to provide a proportion of the full output voltage of the generator. All voltage outputs may be protected by an existing stator overload protector (not shown), and full-rated generator output current may be available for the windings.

That is, each electrical stator winding may include a distal output power lead or tap that is disposed at a distal end of the electrical stator winding to provide the full output voltage of the generator to a load connected thereto; at least one intermediate output power lead that is disposed at an intermediate distance between the power source and the distal end of the electrical stator winding to provide a proportion, e.g., 25%, 50%, and/or 75%, of the full output voltage of generator 242. The number of coil turns, or windings, from the power source of generator 242 to the respective output power leads is determinative of the proportion of the full output voltage of the generator to a load connected to the respective lead.

In accordance with the embodiments of the invention described and recited herein, one or more of the loads connected to an intermediate output power lead includes an energy storage management system and may also include a compressor. The loads that may be connected to an intermediate output power lead may include, in any combination or permutation, a fan motor, a heater, controllers, *etc.*

Accordingly, one or more of the embodiments described and recited herein pertains to the generator 242 providing three-phase AC voltages, a climate control circuit that includes a compressor 217 that may be electrically powered by the three-phase generator 242, a first load that is powered in a first mode, and a second load that is powered in a second mode.

The one or more embodiments may pertain to a transport climate control system for which the first mode is a first voltage level delivered by a first tap on a respective one of the wires, and the second mode is a second voltage level delivered by a second tap on a respective one of the wires, thus delivering any one of *e.g.,* 25%, 50%, and/or 75%, of the full output voltage of generator 242 to a load connected to the respective tap.

In at least one embodiment of transport climate control system 100, one or more of the electric machine 235, the generator 242, the prime mover 240 and the compressor 217 may be part of the power management system 200.

AC distribution network 205 may be configured to direct three-phase AC power to the power converter 210, compressor 217, and the plurality of varying AC loads 215a and 215b.

Generator 242 may supply three-phase AC power to power converter 210, compressor 217, and other AC loads 215a, 215b, *etc.,* which may include, but not be limited to, condenser fan motors, evaporator blowers, drain tube heaters, heater connections, controllers, and energy storage management system 247. At least one embodiment of transport climate control system 100 may include energy storage management system 247 that is powered by generator 242 in either of the first mode or the second mode. Power drawn by each of the plurality of AC loads 215a and 215b may vary over time based on, for example, needs and operation of the transport climate control system 100.

The energy storage management system 247 may receive AC power from the generator 242 and may supply power via a rechargeable energy storage source (RESS) 248, to the power converter 210, to the transport climate control system controller 230 as well as various other components of the transport climate control system that require DC power. The energy storage management system 247 is configured to monitor a charge level of one or more batteries of the RESS 248 and charge the one or more batteries of the RESS 248. The energy storage management system 247 may communicate with, for example, the transport climate control system controller 230 to provide a charge level of one or more batteries of the RESS 248. Also, the energy storage management system 247 may receive instructions from, for example, the transport climate control system controller 230 indicating the amount of power from the RESS 248 should be supplied to the components of the transport climate control system. In some embodiments, the energy storage management system 247 may be a battery charger. Also, in some embodiments, the energy storage management system 247 may have a specified voltage range between 180 VAC and 506 VAC.

In some embodiments, the RESS 248 may include one or more batteries. For example, in one embodiment the RESS 248 may include two batteries (not shown). Each of the batteries may also be connected to the power converter 210 via the energy storage management system 247. It will be appreciated that the RESS 248 may provide sufficient energy to power the transport climate control loads by itself. In some embodiments, the RESS 248 may provide 12 VDC or 24 VDC. In other embodiments, the RESS 248 may provide 48VDC.

In some embodiments, the generator 242 may supply voltage that is beyond the specified voltage range of the energy storage management system 247 to some components (e.g., compressor 217, one or more condenser fans, one or more evaporator blowers, etc.) while still allowing the same generator to supply a voltage within the specified voltage range to the energy storage management system 247 that is within the specified energy storage management system voltage range.

As a non-limiting example, when operating at any operating frequency, the generator 242 may supply 537 VAC (ranging between 483 VAC and 590 VAC). When the specified voltage range of the energy storage system 247 is between 180 VAC and 506 VAC, there is a possibility that the generator 242 may supply a voltage that goes beyond 506 VAC. As discussed above and in more detail with respect to FIG. 3, the energy storage management system 247 may be connected to an intermediate output power lead of the generator 242 so that the maximum voltage received by the energy storage management system 247 is within the specified voltage range of the energy storage management system (e.g., between 180 VAC and 506 VAC). In this example, when the energy storage management system 247 is connected to an intermediate output power lead of the generator 242 that supplies 75% of the full output voltage of generator 242, the energy storage management system 247 may receive between 362 VAC and 443 VAC.

The transport climate control system controller 230 is an electronic device that is configured to manage, command, direct, and regulate the behavior of one or more transport climate control system climate control components of a climate control circuit (e.g., an evaporator, a condenser, the compressor 217, an expansion valve (EXV), an electronic throttling valve (ETV), etc.), the plurality of varying AC loads 215a and 215b, the plurality of varying DC loads 220a and 220b, electric machine 235, *etc.* Although not shown, the transport climate control system controller 230 is also configured to communicate with the power converter controller 210 for providing power management for the transport climate control system.

Compressor 217 may be a refrigerant compressor that compresses refrigerant for use in, for example, a climate control circuit. In accordance with one or more embodiments described and recited herein, the compressor 217 may be electrically driven, receiving electric power from either of three-phase generator 242 or AC distribution network 205. Alternatively, compressor 217 may be mechanically driven, receiving mechanical power from the prime mover 240 and/or the electric machine 235.

The power converter 210 may receive three-phase AC power from generator 242, in accordance with at least one embodiment described and recited herein. In addition, or alternatively, power converter 210 may receive three-phase AC power from prime mover 240 and/or shore/utility power source 245. The power converter 210 is configured to convert the received three-phase AC power into DC power and supply the DC power to the varying DC loads 220 via the transport climate control system controller 230. While the embodiment shown in FIG. 2 shows the power converter 210 supplying DC power to the plurality of varying DC loads 220 via the transport climate control system controller 230, it will be appreciated that in other embodiments the power converter 210 may supply DC power to one or more of the plurality of varying DC loads 220 without passing through the transport climate control system controller 230. In some embodiments, the power converter 210 may also supply DC power to an optional DC power storage device 255. The power converter 210 is controlled by a power converter controller 212.

It will be appreciated that the three-phase AC power received by the power converter 210 is a varying three phase AC power signal that may vary over time based on, for example, changing load requirements from the plurality of varying AC loads 215a and 215b, changing three-phase AC power supplied by the electric machine (e.g., because of changing load requirements from the compressor 217, changing power generated by the prime mover 240, etc.).

The power converter 210 is also configured to supplement three-phase AC current provided by the electric machine 235, the shore/utility power source 245, and/or the generator 242 to the varying AC loads 215a and 215b with reactive three phase AC current to help reduce power efficiency losses.

FIG. 3 illustrates an electrical stator 300, according to at least one embodiment described herein.

In accordance with at least one embodiment of electrical stator 300, corresponding to three-phase generator 242, electrical stator windings 302 may be configured in a Y-configuration. Each electrical stator winding 302A, 302B and 302C may have at least three simultaneously-powered output lines, alternatively referred to as wires or conductors, connected to and leading away from the power source of the generator, to provide a proportion of the full output voltage of the generator. All voltage outputs may be protected by an existing stator overload protector (not shown), and full-rated generator output current may be available for the windings. Further, an overcurrent protector may be provided to cover a converging point of the multiple emanating wires, *e.g.,* at the convergence point of the Y-configuration.

In the embodiment of FIG. 3, each electrical stator winding 302A, 302B and 302C may include a distal output power lead or tap 305A, 305B, and 305C that is disposed at a distal end of the respective electrical stator winding 302A, 302B and 302C to provide the full output voltage of generator 242 to a load connected thereto.

Further, each electrical stator winding 302A, 302B and 302C may include a distal output power lead or tap may include at least one intermediate output power lead that is disposed at an intermediate distance between the power source and the distal end of the electrical stator winding 302A, 302B and 302C to provide a proportion of the full output voltage of generator 242.

Thus, in the embodiment of FIG. 3, intermediate output power lead or tap 31 0A, 31 0B, and 310C on the respective electrical stator windings 302A, 302B and 302C provide 75% of the full output voltage of generator 242 to a load connected thereto; intermediate output power lead or tap 315A, 315B, and 315C on the respective electrical stator windings 302A, 302B and 302C provide 50% of the full output voltage of generator 242 to a load connected thereto; and intermediate output power lead or tap 320A, 320B, and 320C on the respective electrical stator windings 302A, 302B and 302C provide 25% of the full output voltage of generator 242 to a load connected thereto.

The number of coil turns, or windings, from the power source of generator 242 to the respective output power leads is determinative of the proportion of the full output voltage of the generator to a load connected to the respective lead.

Accordingly, the generator 242 may concurrently provide different voltages to multiple components, some of which are unable to receive the full supply voltage output by the generator 242 (e.g., the energy storage management system 247), without the addition of an electronic power converter or a transformer to the apparatus or system.

The terminology used in this specification is intended to describe particular embodiments and is not intended to be limiting. The terms "a," "an," and "the," or even the absence of such modifiers, may refer to the plural forms as well, unless clearly indicated otherwise. The terms "includes," "including," "comprises" and/or "comprising," when used in this specification, indicate the presence of the stated features, integers, steps, operations, elements, and/or components, but do not preclude the presence or addition of one or more other features, integers, steps, operations, elements, and/or components.

## Claims

1. A three-phase generator (242) for supplying power to a component of a transport climate control system (100), the three-phase generator comprising:
an electrical stator winding (302A, 302B, 302C) having multiple coil turns,
wherein the electrical stator winding is configured to be connected to a power source of the three-phase generator;
a distal output power lead (305A, 305B, 305C) disposed at a distal end of the electrical stator winding; and
at least one intermediate output power lead (310A - 310-C, 315A - 315C, 320A - 320C) disposed at an intermediate distance between a power source of the generator and the distal end of the electrical stator winding,
wherein a number of the coil turns determines a generator output voltage at the distal output power lead and at the at least one intermediate output power lead,
**characterised in that** at least one of the intermediate output power leads (310A - 310-C, 315A - 315C, 320A - 320C) is connected, in use of the three-phase generator (242), to a load comprising an energy storage management system (247).

2. The three-phase generator of Claim 1, wherein a position of the at least one intermediate output power lead (310A - 310-C, 315A - 315C, 320A - 320C) determines a proportion of a full generator output voltage provided to a load.

3. The three-phase generator of Claim 1 or Claim 2, wherein the intermediate distance is based on the number of coil turns from the power source to a placement of the at least one output power lead (310A - 310-C, 315A - 315C, 320A - 320C).

4. The three-phase generator of any one of Claims 1-3, wherein the at least one intermediate output power lead (310A - 310-C, 315A - 315C, 320A - 320C) provides any one of 25%, 50%, or 75% of the generator output voltage.

5. The three-phase generator of any one of Claims 1-4, wherein the three-phase generator is used in a portable transport system.

6. The three-phase generator of any one of Claims 1-5, wherein the energy storage management system (247) comprises a battery charger and is configured to monitor and charge a rechargeable energy source.

7. A transport climate control system (100), comprising:
a generator (242) according to any of the preceding claims that provides three-phase AC voltages;
a climate control circuit that includes a compressor (217) that is powered by the three-phase generator;
a first load that is powered in a first mode; and
a second load that is powered in a second mode,
wherein the generator is configured to concurrently provide a first voltage level to the first load and a second voltage level to the second load, wherein the first voltage is greater than the second voltage, wherein either of the first load or the second load is an energy management system (247).

8. The transport climate control system of Claim 7, wherein the three-phase generator comprises:
multiple emanating wires (302A, 302B, 302C), each of the wires having multiple windings; and
taps (305A - 305C, 310A - 310C, 315A - 315C, 320A - 320C) that are equally and proportionally distributed over each of the multiple wires to deliver output voltages that are less than 100% of a voltage output by the three-phase generator.

9. The transport climate control system of Claim 7 or Claim 8,
wherein the first mode is the first voltage level delivered by a first tap on a respective one of the wires, and
wherein the second mode is the second voltage level delivered by a second tap on a respective one of the wires.

10. The transport climate control system of any one of Claims 7-9, further comprising:
an energy storage management system (247) that is powered in either of the first mode or the second mode.

11. The transport climate control system of Claims 8 or Claim 9, wherein the taps disposed on the respective wires deliver any one of 25%, 50%, or 75% of the voltage output from the power source.

12. The transport climate control system of any one of Claims 7-11, wherein the three-phase generator is used to power any one of a fan motor, a vehicle heater, or a controller.

13. The transport climate control system of any one of Claims 8-12, wherein each tap on each of the respective wires is simultaneously powered.

14. The transport climate control system of any one of Claims 8-13, wherein at least one tap on each of the respective wires includes an overcurrent protector.

15. The transport climate control system of any one of Claims 8-14, wherein an overcurrent protector covers a converging point of the multiple emanating wires.

## Patentansprüche

1. Drehstromgenerator (242) zum Versorgen einer Komponente eines Transportklimatisierungssystems (100) mit Strom, wobei der Drehstromgenerator Folgendes umfasst:
eine elektrische Statorwicklung (302A, 302B, 302C) mit mehreren Spulenwindungen,
wobei die elektrische Statorwicklung dazu konfiguriert ist, mit einer Stromquelle des Drehstromgenerators verbunden zu werden;
eine distale Ausgangsstromleitung (305A, 305B, 305C), die an einem distalen Ende der elektrischen Statorwicklung angeordnet ist; und
mindestens eine Zwischenausgangsstromleitung (310A-310-C, 315A-315C, 320A-320C), die in einem Zwischenabstand zwischen einer Stromquelle des Generators und dem distalen Ende der elektrischen Statorwicklung angeordnet ist,
wobei eine Anzahl der Spulenwindungen eine Generatorausgangsspannung an der distalen Ausgangsstromleitung und an der mindestens einen Zwischenausgangsstromleitung bestimmt,
**dadurch gekennzeichnet, dass** mindestens eine der Zwischenausgangsstromleitungen (310A-310-C, 315A-315C, 320A-320C) bei Verwendung des Drehstromgenerators (242) mit einem Verbraucher verbunden ist, der ein Energiespeicher-Managementsystem (247) umfasst.

2. Drehstromgenerator nach Anspruch 1, wobei eine Position der mindestens einen Zwischenausgangsstromleitung (310A-310-C, 315A-315C, 320A-320C) einen Anteil einer gesamten Generatorausgangsspannung bestimmt, die einem Verbraucher bereitgestellt wird.

3. Drehstromgenerator nach Anspruch 1 oder Anspruch 2, wobei der Zwischenabstand auf der Anzahl der Spulenwindungen von der Stromquelle bis zu einer Platzierung der mindestens einen Ausgangsstromleitung (310A-310-C, 315A-315C, 320A-320C) basiert.

4. Drehstromgenerator nach einem der Ansprüche 1-3, wobei die mindestens eine Zwischenausgangsstromleitung (310A-310-C, 315A-315C, 320A-320C) entweder 25 %, 50 % oder 75 % der Generatorausgangsspannung bereitstellt.

5. Drehstromgenerator nach einem der Ansprüche 1-4, wobei der Drehstromgenerator in einem tragbaren Transportsystem verwendet wird.

6. Drehstromgenerator nach einem der Ansprüche 1-5, wobei das Energiespeicher-Managementsystem (247) ein Batterieladegerät umfasst und zum Überwachen und Laden einer wiederaufladbaren Energiequelle konfiguriert ist.

7. Transportklimatisierungssystem (100), umfassend:
einen Generator (242) nach einem der vorhergehenden Ansprüche, der Drehstrom-Wechselspannungen liefert;
einen Klimatisierungskreislauf, der einen Kompressor (217) beinhaltet, der durch den Drehstromgenerator mit Strom versorgt wird;
einen ersten Verbraucher, der in einem ersten Modus mit Strom versorgt wird; und
einen zweiten Verbraucher, der in einem zweiten Modus mit Strom versorgt wird,
wobei der Generator dazu konfiguriert ist, gleichzeitig dem ersten Verbraucher einen ersten Spannungspegel und dem zweiten Verbraucher einen zweiten Spannungspegel bereitzustellen, wobei die erste Spannung höher als die zweite Spannung ist, wobei entweder der erste Verbraucher oder der zweite Verbraucher ein Energiemanagementsystem (247) ist.

8. Transportklimatisierungssystem nach Anspruch 7, wobei der Drehstromgenerator Folgendes umfasst:
mehrere Ableitungsdrähte (302A, 302B, 302C), wobei jeder der Drähte mehrere Wicklungen aufweist; und
Abgriffe (305A-305C, 310A-310C, 315A-315C, 320A-320C), die gleichmäßig und proportional über jede der mehreren Drähte verteilt sind, um Ausgangsspannungen zu liefern, die weniger als 100 % der durch den Drehstromgenerator ausgegebenen Spannung betragen.

9. Transportklimatisierungssystem nach Anspruch 7 oder Anspruch 8,
wobei der erste Modus der erste Spannungspegel ist, der durch einen ersten Abgriff an einem jeweiligen der Drähte geliefert wird, und
wobei der zweite Modus der zweite Spannungspegel ist, der durch einen zweiten Abgriff an einem jeweiligen der Drähte geliefert wird.

10. Transportklimatisierungssystem nach einem der Ansprüche 7-9, ferner umfassend:
ein Energiespeicher-Managementsystem (247), das entweder in dem ersten Modus oder in dem zweiten Modus mit Strom versorgt wird.

11. Transportklimatisierungssystem nach Anspruch 8 oder Anspruch 9, wobei die an den jeweiligen Drähten angeordneten Abgriffe entweder 25 %, 50 % oder 75 % der von der Stromquelle ausgegebenen Spannung liefern.

12. Transportklimatisierungssystem nach einem der Ansprüche 7-11, wobei der Drehstromgenerator verwendet wird, um ein beliebiges von einem Lüftermotor, einer Fahrzeugheizung oder einer Steuerung mit Strom zu versorgen.

13. Transportklimatisierungssystem nach einem der Ansprüche 8-12, wobei jeder Abgriff an jedem der jeweiligen Drähte gleichzeitig mit Strom versorgt wird.

14. Transportklimatisierungssystem nach einem der Ansprüche 8-13, wobei mindestens ein Abgriff an jedem der jeweiligen Drähte einen Überstromschutz beinhaltet.

15. Transportklimatisierungssystem nach einem der Ansprüche 8-14, wobei ein Überstromschutz einen Zusammenführungspunkt der mehreren Ableitungsdrähte abdeckt.

## Revendications

1. Générateur triphasé (242) pour alimenter en énergie un composant d'un système de commande de climatisation de transport (100), le générateur triphasé comprenant :
un enroulement de stator électrique (302A, 302B, 302C) présentant de multiples spires de bobine,
dans lequel l'enroulement de stator électrique est configuré pour être connecté à une source d'alimentation du générateur triphasé ;
un fil d'alimentation de sortie distal (305A, 305B, 305C) disposé au niveau d'une extrémité distale de l'enroulement de stator électrique ; et
au moins un fil d'alimentation de sortie intermédiaire (310A - 310-C, 315A - 315C, 320A - 320C) disposé à une distance intermédiaire entre une source d'alimentation du générateur et l'extrémité distale de l'enroulement de stator électrique,
dans lequel un nombre de spires de bobine détermine une tension de sortie de générateur au niveau du fil d'alimentation de sortie distal et au niveau de l'au moins un fil d'alimentation de sortie intermédiaire,
**caractérisé en ce qu'**au moins un des fils d'alimentation de sortie intermédiaires (310A - 310-C, 315A - 315C, 320A - 320C) est connecté, lors de l'utilisation du générateur triphasé (242), à une charge comprenant un système de gestion de stockage d'énergie (247).

2. Générateur triphasé selon la revendication 1, dans lequel une position de l'au moins un fil d'alimentation de sortie intermédiaire (310A - 310-C, 315A - 315C, 320A - 320C) détermine une proportion d'une tension de sortie de générateur complète fournie à une charge.

3. Générateur triphasé selon la revendication 1 ou la revendication 2, dans lequel la distance intermédiaire est basée sur le nombre de spires de bobine à partir de la source d'alimentation jusqu'au placement de l'au moins un fil d'alimentation de sortie (310A - 310-C, 315A - 315C, 320A - 320C) .

4. Générateur triphasé selon l'une quelconque des revendications 1 à 3, dans lequel l'au moins un fil d'alimentation de sortie intermédiaire (310A - 310-C, 315A - 315C, 320A - 320C) fournit un quelconque pourcentage parmi 25 %, 50 %, ou 75 % de la tension de sortie de générateur.

5. Générateur triphasé selon l'une quelconque des revendications 1 à 4, dans lequel le générateur triphasé est utilisé dans un système de transport portable.

6. Générateur triphasé selon l'une quelconque des revendications 1 à 5, dans lequel le système de gestion de stockage d'énergie (247) comprend un chargeur de batterie et est configuré pour surveiller et charger une source d'énergie rechargeable.

7. Système de commande de climatisation de transport (100), comprenant :
un générateur (242) selon l'une quelconque des revendications précédentes qui fournit des tensions CA triphasées ;
un circuit de commande de climatisation qui comporte un compresseur (217) qui est alimenté par le générateur triphasé ;
une première charge qui est alimentée dans un premier mode ; et
une seconde charge qui est alimentée dans un second mode,
dans lequel le générateur est configuré pour fournir simultanément un premier niveau de tension à la première charge et un second niveau de tension à la seconde charge,
dans lequel la première tension est supérieure à la seconde tension, dans lequel soit la première charge soit la seconde charge est un système de gestion d'énergie (247).

8. Système de commande de climatisation de transport selon la revendication 7, dans lequel le générateur triphasé comprend :
de multiples câbles émanants (302A, 302B, 302C), chacun des câbles ayant de multiples enroulements ; et
des prises (305A - 305C, 310A - 310C, 315A - 315C, 320A - 320C) qui sont réparties de manière égale et proportionnelle sur chacun des multiples câbles pour fournir des tensions de sortie inférieures à 100 % d'une tension émise par le générateur triphasé.

9. Système de commande de climatisation de transport selon la revendication 7 ou la revendication 8,
dans lequel le premier mode est le premier niveau de tension délivré par une première prise sur l'un respectif des câbles, et
dans lequel le second mode est le second niveau de tension délivré par une seconde prise sur l'un respectif des câbles.

10. Système de commande de climatisation de transport selon l'une quelconque des revendications 7 à 9, comprenant en outre :
un système de gestion de stockage d'énergie (247) qui est alimenté soit dans le premier mode, soit dans le second mode.

11. Système de commande de climatisation de transport selon la revendication 8 ou la revendication 9, dans lequel les prises disposées sur les câbles respectifs délivrent un pourcentage quelconque parmi 25 %, 50 % ou 75 % de la tension émise à partir de la source d'alimentation.

12. Système de commande de climatisation de transport selon l'une quelconque des revendications 7 à 11, dans lequel le générateur triphasé est utilisé pour alimenter l'un quelconque parmi un moteur de ventilateur, un chauffage de véhicule ou un dispositif de commande.

13. Système de commande de climatisation de transport selon l'une quelconque des revendications 8 à 12, dans lequel chaque prise sur chacun des câbles respectifs est alimentée simultanément.

14. Système de commande de climatisation de transport selon l'une quelconque des revendications 8 à 13, dans lequel au moins une prise sur chacun des câbles respectifs comporte un protecteur contre les surintensités.

15. Système de commande de climatisation de transport selon l'une quelconque des revendications 8 à 14, dans lequel un protecteur contre les surintensités recouvre un point convergent des multiples câbles émanants.
